## Europäisches Patentamt
## European Patent Office
## Office européen des brevets

(11) Veröffentlichungsnummer: **0 039 470**
**A2**

# EUROPÄISCHE PATENTANMELDUNG

(21) Anmeldenummer: **81103195.4**

(22) Anmeldetag: **28.04.81**

(51) Int. Cl.³: **A 61 C 7/00**

(30) Priorität: **02.05.80 DE 3016961**

(43) Veröffentlichungstag der Anmeldung: **11.11.81**
**Patentblatt 81/45**

(84) Benannte Vertragsstaaten: **AT BE CH FR GB IT LI LU NL SE**

(71) Anmelder: **Pedrazzini, Francesco, Ohlmüllerstrasse 20, D-8000 München 90 (DE)**

(72) Erfinder: **Nardella, Alessandro, Hildastrasse 5, D-6831 Oberhausen-Rheinhausen (DE)**

(74) Vertreter: **Ebbinghaus, Dieter K.L. Schiff Dr. A. v. Füner et al, Dipl. Ing. P. Strehl Dr. U. Schübel-Hopf Dipl. Ing. D. Ebbinghaus Dr. Ing. D. Finck Patentanwälte Mariahilfplatz 2&3, D-8000 München 90 (DE)**

(54) Variable Transversal-Dehnschraube.

(57) Eine Dehnschraube zur Regulierung der Zahnstellung enthält zwei am jeweils ersten Ende gelenkig miteinander verbundene, je in eine Dehn-Halbplatte (16) einzubettende Schenkel (1a, 1b), an deren zweiten Enden je ein drehbarer Kopf (2a, 2b) mit einem Gewindeloch befestigt ist, dessen Gewinde zu dem des anderen drehbaren Kopfes gegenläufig ist. In die Gewindelöcher der Drehköpfe ist eine Doppelspindel (4b) eingeschraubt. Erfindungsgemäß ist auch am ersten Ende der Schenkel (1a, 1b) je ein drehbarer Kopf (2c, 2d) mit einem Gewindeloch mit gegenläufigen Gewinden befestigt. In die Gewindelöcher der an den ersten Enden der Schenkel (1a, 1b) befestigten Gewindeköpfe (2c, 2d) ist eine Doppelspindel (4a) geschraubt.

Variable Transversal-Dehnschraube

Die Erfindung bezieht sich auf eine Dehnschraube zur Regulierung der Zahnstellung, mit zwei am jeweils ersten Ende gelenkig miteinander verbundenen, je in eine Dehn-Halbplatte einzubettenden Schenkeln, an deren zweiten Enden je ein drehbarer Kopf mit einem Gewindeloch befestigt ist, dessen Gewinde zu dem des anderen drehbaren Kopfes gegenläufig ist, und mit einer in die Gewindelöcher der Drehknöpfe eingeschraubten Doppelspindel.

Eine solche Dehnschraube ist bereits aus einem Prospekt der Firma Alessandro Pozzi, Florenz, bekannt. Sie ist dort als Fächerdehnschraube Modell Leone Nr. 515 und 516 bezeichnet.

Wenn bei der Zahnregulierung der Zahnbogen gespreizt oder gedehnt werden muß, wird zunächst eine die Zähne von innen berührende Dehnplatte an das Gebiß angepaßt. Diese Dehnplatte wird anschließend halbiert und die beiden Hälften werden mit Hilfe der Dehnschraube miteinander verbunden. Diese wird mit fortschreitender Dehnung des Kiefers immer weiter geöffnet, so daß stets ein Druck von innen gegen die Zähne wirkt.

Da sich die bekannte Dehnschraube nur an der Seite verstellen läßt, an der sich die Doppelspindel befindet, ist man bei ihrer Anwendung gewissen Einschränkungen unterworfen. Insbesondere ist es bei Anwendung der bekannten Dehnschraube nicht möglich, nach Belieben auch

0039470

einen Druck nach vorne oder hinten auf die Zähne auszuüben, so daß sehr schnell zusätzliche Hilfsmittel wie Spangen und dgl. notwendig werden und man im Laufe des Fortschritts der Kieferbehandlung gezwungen ist, immer wieder neue Dehnplatten anzupassen und einzusetzen.

Der Erfindung liegt daher die Aufgabe zugrunde, eine Dehnschraube zu schaffen, die eine möglichst vielseitige Anwendung gestattet und die es ermöglicht, die Zähne nicht nur vorn und/oder hinten hauptsächlich in Querrichtung auseinanderzudrücken, sondern auch nach vorn oder hinten gerichtete Kräfte auf sie auszuüben.

Diese Aufgabe wird erfindungsgemäß dadurch gelöst, daß auch am ersten Ende der Schenkel je ein drehbarer Kopf mit je einem Gewindeloch mit gegenläufigen Gewinden befestigt ist, und daß in die Gewindelöcher der an den ersten Enden der Schenkel befestigten Gewindeköpfe eine zweite Doppelspindel geschraubt ist.

Da bei der erfindungsgemäßen, variablen Transversal-Dehnschraube sich die Schenkel an beiden Enden verstellen lassen, läßt sich eine einmal angepaßte und angefertigte Dehnplatte während der gesamten Dauer einer kieferorthopädischen Behandlung anwenden. Dabei ist es möglich, auf die Zähne nicht nur vorn und/oder hinten unabhängig voneinander Transversalkräfte auszuüben, sondern auch eine nach vorn oder hinten gerichtete Druckkomponente.

Die Erfindung wird im folgenden anhand der Zeichnung näher erläutert. Es zeigen:

Fig. 1   eine Draufsicht einer erfindungsgemäßen Dehnschraube,

Fig. 2   eine perspektivische Darstellung der Dehnschraube,

Fig. 3 die schematische Darstellung eines anomalen und eines gesunden Gebisses,

Fig. 4 schematisch die bei Anwendung der erfindungsgemäßen Dehnschraube auszuübenden Kräfte und

Fig. 5 bis 8 in schematischer Darstellung verschiedene Anwendungsbeispiele der erfindungsgemäßen Dehnschraube.

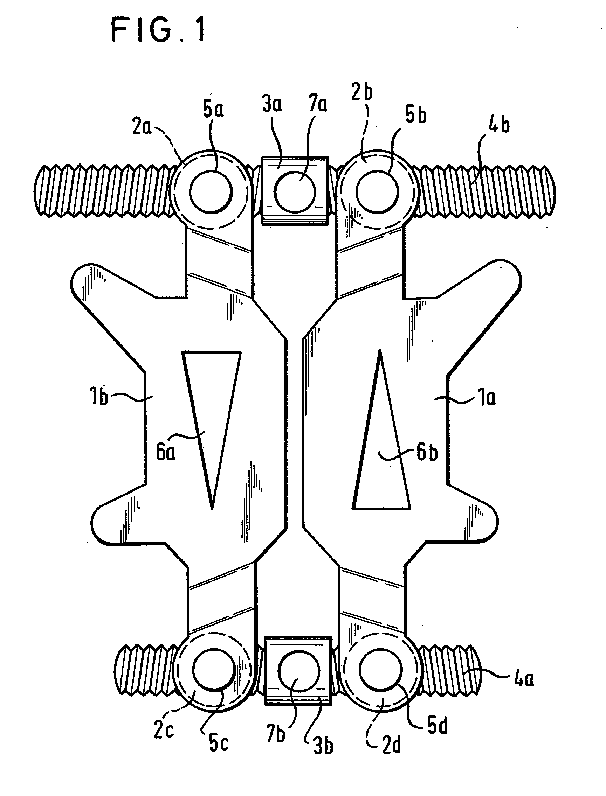

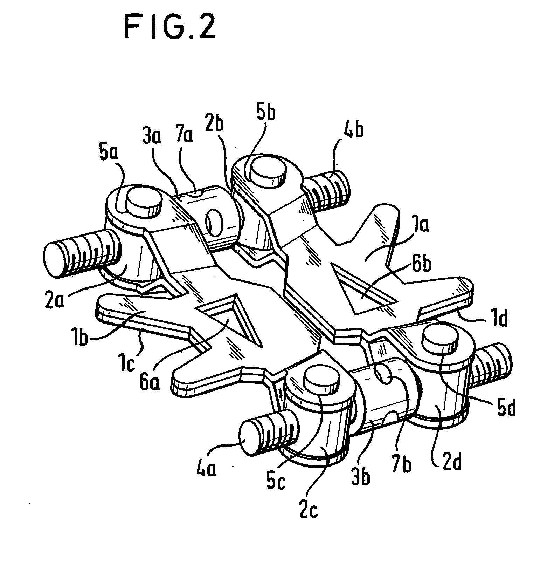

Gemäß Fig. 1 und 2 bestehen die Schenkel der Dehnschraube aus jeweils aufeinandergelegten Blechkörpern 1a, 1d bzw. 1b, 1c. Die Blechkörper 1a, 1d und 1b, 1c, die je Richtungspfeile 6a, 6b aufweisen, sind an ihren Enden gabelförmig geöffnet und tragen dort drehbare Köpfe 2b, 2d bzw. 2a, 2c. An den Enden der Blechkörper 1a, 1b, 1c und 1d sind jeweils Bohrungen vorgesehen, in denen an den drehbaren Köpfen 2a, 2b, 2c, 2d befestigte Drehzapfen 5a, 5b, 5c, 5d sitzen.

Die Drehköpfe 2a und 2b sowie 2c und 2d sind jeweils mit Gewindelöchern mit gegenläufigen Gewinden versehen, in die jeweils eine Doppelspindel 4a bzw. 4b geschraubt ist. Zwischen den Drehköpfen weisen die beiden Spindeln 4a, 4b jeweils einen Schraubkopf 3b bzw. 3a mit radialen Löchern 7b bzw. 7a auf.

Bei Drehung der Spindeln 4a, 4b werden die zugehörigen drehbaren Köpfe 2c, 2d bzw. 2a, 2b und damit die entsprechenden Enden der Schenkel 1a, 1d und 1b, 1c voneinander wegbewegt bzw. einander angenähert. Zur Drehung der Spindeln 4a, 4b kann ein einfacher Draht verwendet werden, der in die radialen Löcher 7a oder 7b eingesteckt wird.

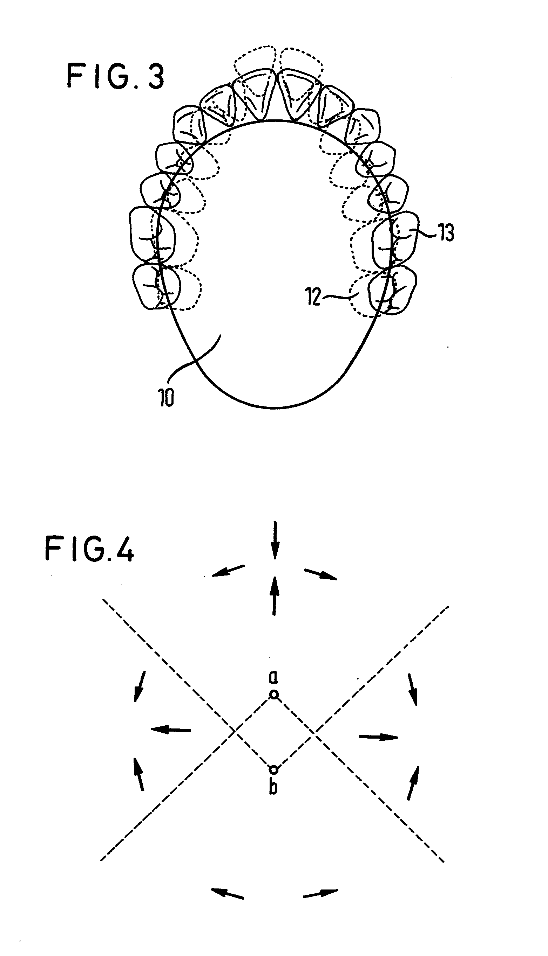

Fig. 3 zeigt gestrichelt ein krankhaftes Gebiß 12 und ein gesundes oder korrigiertes Gebiß, dessen Form der idealen

- 4 -

0039470

Eiform 10 entspricht.

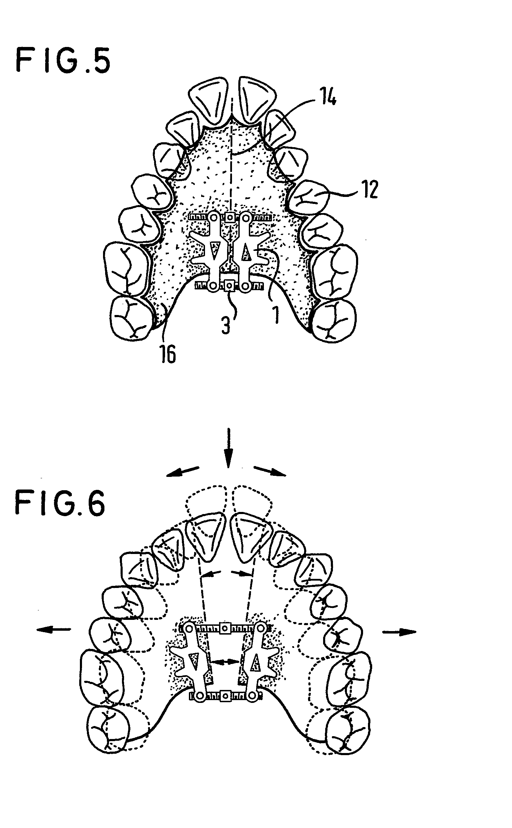

In Fig. 4 sind (mit Ausnahme der senkrecht nach oben bzw. unten gerichteten Pfeile) die Kräfte gezeigt, die mit Hilfe der erfindungsgemäßen Dehnschraube auf das krankhafte Gebiß 12 der Fig. 3 ausgeübt werden können.

Fig. 5 und 6 zeigen die Anwendung der erfindungsgemäßen Dehnschraube zu Beginn bzw. gegen Ende einer kieferorthopädischen Behandlung. Die beiden durch einen Sägeschnitt 14 voneinander getrennten Dehn-Halbplatten 16 sind durch die erfindungsgemäße Dehnschraube miteinander verbunden und können durch entsprechende Drehung der Schraubköpfe 3 der Spindeln 4 nach Belieben vorn oder hinten stärker bzw. schwächer auseinandergedrückt werden. Zusätzliche Korrekturmöglichkeiten ergeben sich durch Bearbeitung, z.B. Abfeilen der an der Innenseite der Zähne anliegenden Außenkante der Dehn-Halbplatten. Dabei können die Zähne vorn und hinten nach Belieben mehr oder weniger stark auseinandergedrückt werden, wobei es möglich ist, auch nach vorn oder hinten gerichtete Druckkomponenten auf die Zähne auszuüben.

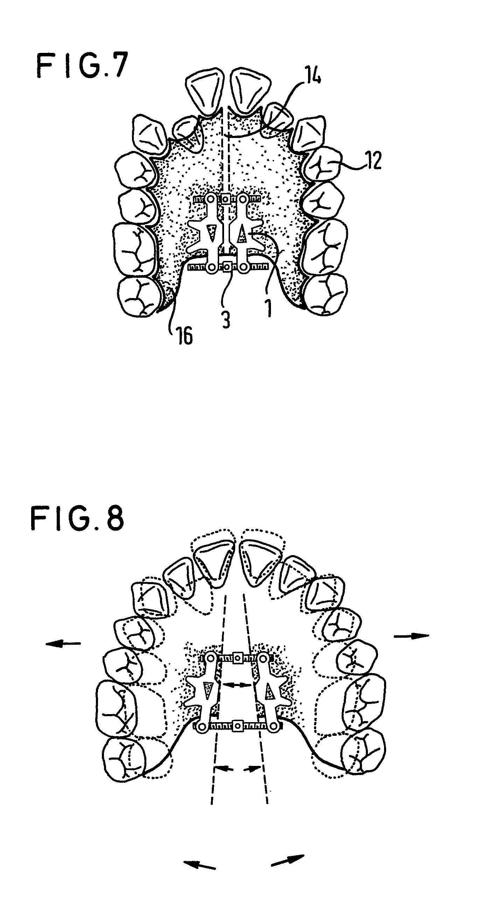

Auch Fig. 7 und 8 zeigen die Anwendung der erfindungsgemäßen Dehnschraube am Beginn bzw. gegen Ende einer Zahnbehandlung, wobei zu Beginn der Behandlung die beiden zweiten Schneidezähne stark zurückversetzt waren. Die Betrachtung auch dieser Darstellungen zeigt, daß die Zähne mit Hilfe der erfindungsgemäßen Dehnschraube vorn und hinten unabhängig voneinander auseinandergedrückt werden können, wobei die zweiten Schneidezähne durch Einlagen nach vorn gedrückt werden können, sobald soviel Platz im Kiefer geschaffen ist, daß sie in die Zahnreihe passen.

Zusammenfassend kann der Vorteil der erfindungsgemäßen Doppel-Fächerdehnschraube darin gesehen werden, daß mit ihr jede Variationsmöglichkeit der transversalen vorderen und hinteren Dehnung gegeben ist, ohne daß dafür verschiedene Dehnschrauben nacheinander eingebaut werden müßten. Ein weiterer Vorteil besteht darin, daß die erfindungsgemäße Doppel-Fächerdehnschraube eine Beschleunigung des Behandlungsverlaufs ermöglicht, weil die bekannte Fächerdehnschraube stets nur einen Teil der zu bewältigenden Aufgabe erfüllen kann.

0039470

Patentanspruch:

Dehnschraube zur Regulierung der Zahnstellung, mit zwei am jeweils ersten Ende gelenkig miteinander verbundenen, je in eine Dehn-Halbplatte einzubettenden Schenkeln, an deren zweiten Enden je ein drehbarer Kopf mit einem Gewindeloch befestigt ist, dessen Gewinde zu dem des anderen drehbaren Kopfes gegenläufig ist, und mit einer in die Gewindelöcher der Drehköpfe eingeschraubten Doppelspindel, dadurch g e k e n n z e i c h n e t , daß auch am ersten Ende der Schenkel (1a, 1b) je ein drehbarer Kopf (2c, 2d) mit einem Gewindeloch mit gegenläufigen Gewinden befestigt ist, und daß in die Gewindelöcher der an den ersten Enden der Schenkel (1a, 1b) befestigten Gewindeköpfe (2c, 2d) eine zweite Doppelspindel (4a) geschraubt ist.

FIG.1

0039470

# FIG.2

FIG. 3

13

12

10

FIG.4

a

b

FIG.5

14

12

3    1

16

FIG.6

0039470

5/5

FIG.7

FIG.8